Europäisches Patentamt

European Patent Office

Office européen des brevets

(11) Publication number: **0 252 123**
**B1**

(12) **EUROPEAN PATENT SPECIFICATION**

(45) Date of publication of patent specification: **08.08.90**

(21) Application number: **87900557.7**

(22) Date of filing: **22.12.86**

(86) International application number:
**PCT/US86/02727**

(87) International publication number:
**WO 87/03846 02.07.87 Gazette 87/14**

(51) Int. Cl.⁵: **B 60 J 1/00, B 60 J 1/02, B 60 J 1/08, B 60 J 1/18**

(54) **METHOD OF ASSEMBLING A VEHICLE FROM MODULAR COMPONENTS.**

(30) Priority: **23.12.85 US 812727**
**18.04.86 US 853399**
**23.05.86 US 866446**

(43) Date of publication of application:
**13.01.88 Bulletin 88/02**

(45) Publication of the grant of the patent:
**08.08.90 Bulletin 90/32**

(84) Designated Contracting States:
**BE DE FR GB IT LU NL SE**

(56) References cited:
**WO-A-85/01468**
**BE-A- 853 064**
**DE-A-2 637 964**
**US-A-3 783 568**
**US-A-3 843 982**
**US-A-4 072 340**
**US-A-4 249 517**
**US-A-4 332 413**
**US-A-4 364 595**
**US-A-4 487 448**

(73) Proprietor: **LIBBEY-OWENS-FORD COMPANY**
**811 Madison Avenue**
**Toledo Ohio 43695 (US)**

(72) Inventor: **JOHNSTON, Norman, W.**
**25859 Willowbend Road**
**Perrysburg, OH 43551 (US)**
Inventor: **WEAVER, William, R.**
**4380 River Road**
**Toledo, OH 43614 (US)**

(74) Representative: **Hands, Horace Geoffrey et al**
**LEWIS W. GOOLD & CO. Whitehall Chambers 23,**
**Colmore Row**
**Birmingham B3 2BL (GB)**

Courier Press, Leamington Spa, England.

## Description

Background of the Invention

The present invention relates generally to a method of assembling a vehicle and in particular to the use of modular glass components in the assembly of a vehicle.

WO—A—85/01468 discloses the use of a mould to form a polymeric gasket around the periphery of a vehicle windshield (windscreen) or back-light (rear window) which can then be assembled direct to the appropriate aperture in the vehicle body as a fixed window using a bead of adhesive applied to the gasket.

Summary of the Invention

The present invention relates to a method of assembling a vehicle from a vehicle body including door window raising and lowering linkage and a plurality of modular window assemblies including door windows comprising the steps of:

(a) positioning a sheet of transparent material and a bracket for cooperation with said linkage positioned along the periphery of said sheet and within the interior of a mould chamber formed by at least two cooperating mould sections;

(b) said mould sections provided with a gasket shaping portion which cooperates with a first peripheral portion of the sheet and said bracket to define a first gasket forming cavity corresponding to a first gasket member to be formed and cooperates with a second peripheral portion of the sheet to define a second gasket forming cavity corresponding to a second gasket member to be formed;

(c) injecting into the first and second gasket forming cavities a composition which is capable of polymerization when cured and, when cured in contact with the sheet and bracket, it adheres thereto to produce the first and second gasket members:

(d) removing the sheet and the first and second gasket members and the bracket as a modular door window assembly from the mould chamber;

(e) repeating steps (a) through (d) to produce a plurality of modular door window assemblies; and

(f) attaching said plurality of modular window assemblies to a vehicle body to assemble a vehicle with said linkages cooperating with said brackets.

The present invention also relates to a method of assembling a vehicle from a vehicle body including door window raising and lowering linkage and a plurality of modular window assemblies including door windows comprising the steps of:

(a) positioninga sheet of transparent material within the interior of a mould chamber formed by at least two cooperating mould sections;

(b) said mould sections provided with a gasket shaping portion and a bracket shaping portion which cooperate with a first peripheral portion of the sheet to define a first gasket forming cavity corresponding to a first gasket member and a bracket forming cavity corresponding to a bracket to be formed and cooperates with a second peripheral portion of the sheet to define a second gasket forming cavity corresponding to a second gasket member to be formed;

(c) injecting into the first and second gasket forming cavities a composition which is capable of polymerization when cured and, when cured in contact with the sheet, it adheres thereto to produce the first and second gasket members and bracket;

(d) removing the sheet and the first and second gasket members and bracket as a modular door window assembly from the mould chamber;

(e) repeating steps (a) through (d) to produce a plurality of modular door window assemblies; and

(f) attaching said plurality of modular window assemblies to a vehicle body to assemble a vehicle with said linkages cooperating with said brackets.

Particular embodiments of the invention are set out in the dependent claims 3 to 6.

Brief Description of the Drawings

The above, as well as other advantages of the present invention, will become readily apparent to those skilled in the art from the following detailed description of a preferred embodiment when considered in the light of the accompanying drawings, in which:

Fig. 1 is a perspective view of a modular door window assembly for use in the method according to the present invention;

Fig. 2 is a front elevation view of the door window assembly of Fig. 1 installed in a door frame;

Fig. 3 is a perspective view of an encapsulated windshield and leaf screen for use in the method according to the present invention;

Fig. 4 is a perspective view of an encapsulated hinged back window and side window assembly for use in the method according to the present invention;

Fig. 5 is an enlarged fragmentary sectional view of the window assembly of Fig. 4 taken along the line 5—5 thereof;

Fig. 6 is an exploded perspective view showing a vehicle body and various modular glass assemblies shown in Figs. 1—5 for use with the method according to the present invention;

Fig. 7 is a front elevational view of an alternate embodiment of the door window assembly of Fig. 1;

Fig. 8 is a perspective view of an alternate embodiment of the encapsulated windshield and leaf screen of Fig. 3:

Fig. 9 is a perspective view of an alternate embodiment of the encapsulated back window and side windows of Fig. 4;

Fig. 10 is an exploded perspective view of a vehicle body and various modular assemblies shown in Figs. 6—8 for use with the assembly method according to the present invention; and

Fig. 11 is an exploded perspective view of another alternate embodiment of an encapsulated back window.

Description of the Preferred Embodiments

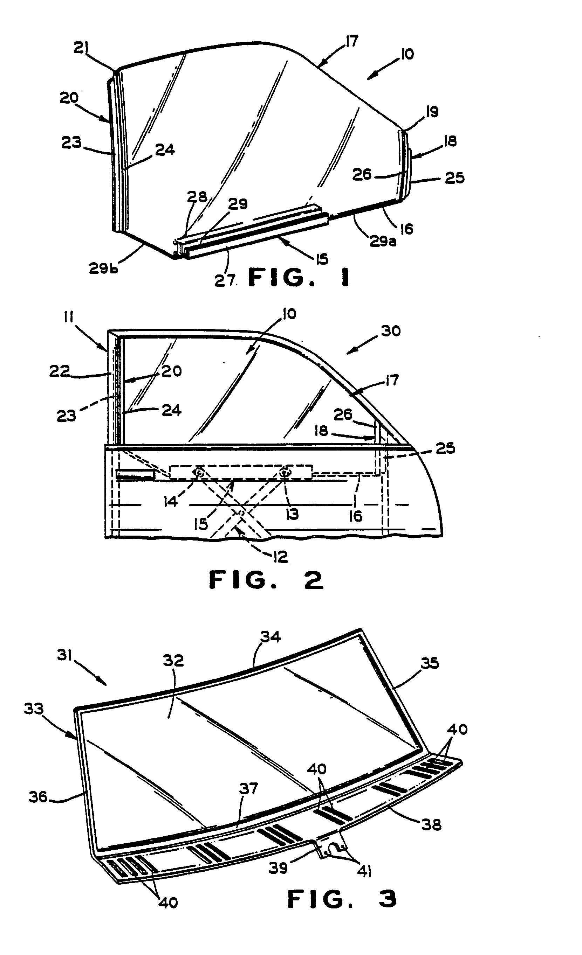

There is shown in Fig. 1 a modular window assembly 10 adapted to be installed in a vehicle door frame (not shown) for use in the method according to the present invention. As shown in Fig. 2, the assembly 10 is installed in a front door 11 of a vehicle (not shown). A scissor linkage 12 is provided in the door 11 to raise and lower the window assembly 10. Linkage 12 may be of any conventional type and is shown in the raised position. The linkage 12 is pivotally connected at 13 and 14 to a bracket 15 attached to a lower edge 16 of window 17 in the window assembly 10.

As shown in the drawings, front gasket 18 is attached to a front edge 19 of the window 17 and a rear gasket 20 is attached to a rear edge 21 of the window 17. The front door 11 of the vehicle includes a window frame having a rear section 22 formed to receive a flange member 23 formed on the gasket 20 as the window is raised and lowered. The flange member extends from a body portion 24 of the gasket 20 which encloses the rear edge 21 of the window 17 and is attached thereto for movement with the window as the linkage 12 raises and lowers the window assembly 10. The front gasket 18 is of similar construction with a flange member 25 and a body portion 26. The flange member 25 is accepted by a gasket (not shown) in a front section of the window frame.

The bracket 15 includes an angled, elongate plate member 27 secured to the lower end of a C-shaped channel member 28. The channel member 28 is formed to accept rollers (not shown) attached at the pivot points 13 and 14 of the linkage 12 to permit raising and lowering of the window assembly 10. The angle plate member 27 includes an upper L-shaped portion which cooperates with the side wall of the channel member 28 to define an upwardly facing channel for receiving a lower peripheral edge 16 of the window 17. The lower edge 16 is secured relative to the bracket 15 by a U-shaped gasket 29. The gaskets 18, 20 and 29 are all simultaneously molded in situ to the window 17 and the bracket 15. In addition, the gasket 29 can have a portion 29a moulded along the lower edge 16 between the bracket 15 and the front gasket 18. Also, a portion 29b can be moulded on the lower edge 16 between the bracket 15 and the rear gasket 20. After the door window assembly 10 has been formed with the gaskets and bracket, it can be assembled into the front door 11 to form a modular door assembly 30 for use in assembling a vehicle. Alternatively, the bracket 15, or portions thereof, can be formed of moulding material at the same time the gaskets are formed.

The modular door window assembly is made using a mould chamber formed of at least two cooperating mould sections. These are provided with gasket shaping portions which cooperate with the peripheral portions of the glass sheet and with the bracket except in cases where the bracket is to be moulded at the same time as the gaskets are formed: in such cases the mould comprises a bracket forming cavity. However the bracket may be of metal. Where a separate pre-formed bracket is employed it is to be positioned in the mould along the periphery of the sheet.

The gasket material is injected into the mould cavities and is one capable of polymerization when used, and when used in contact with the sheet and bracket, of adhering thereto.

In certain cases a plug may be inserted between first and second cavities in the mould before injecting composition into one of the cavities, the plug may be removed, and then composition inserted into the other of the cavities.

The gasket forming material may be elastomeric, and may be a polyurethane.

There is shown in Fig. 3 a modular windshield assembly 31 including a glass sheet 32 having its peripheral edges encapsulated by a gasket 33. The gasket 33 includes a top portion 34, side portions 35 and 36, and a bottom portion 37 which portions completely encapsulate the peripheral edges of the glass sheet 32. Attached to the bottom portion 37 is an integral leaf screen 38 and a locating tab means 39 extends from a front edge of the leaf screen 38. The leaf screen 38 replaces the prior art leaf screens which were typically formed of wire mesh, stamped steel or moulded rigid plastic. These screens are utilized to prevent debris from falling into the engine compartment between the hood and body of those vehicles having windshield wipers mounted in the area. In order to provide for the passage of air between the exterior of the vehicle and the engine compartment, a plurality of elongated slots or apertures 40 are typically formed in the leaf screen 38.

The gasket portions 34, 35, 36 and 37 completely encapsulate the peripheral edge of the glass sheet 32 to provide a seal against the intrusion of fluids between the windshield and the frame of the vehicle in which it is installed. Thus, the windshield assembly 31 is typically fitted into an opening in the vehicle and the gasket 33 is secured to the vehicle with a suitable adhesive. The leaf screen 38 is formed integral with the remaining portions of the gasket 33 and at the proper angle such that it fills an opening between the body of the vehicle and the hood of the vehicle. The tab means 39 can include one or more apertures 41 for receiving fastening means to secure the leading edge of the leaf screen, typically to the body of the vehicle. The leaf screen 38 and/or the tab 39 may also be formed of metal, plastic or any suitable material and attached to the glass sheet 32 with the gasket 33.

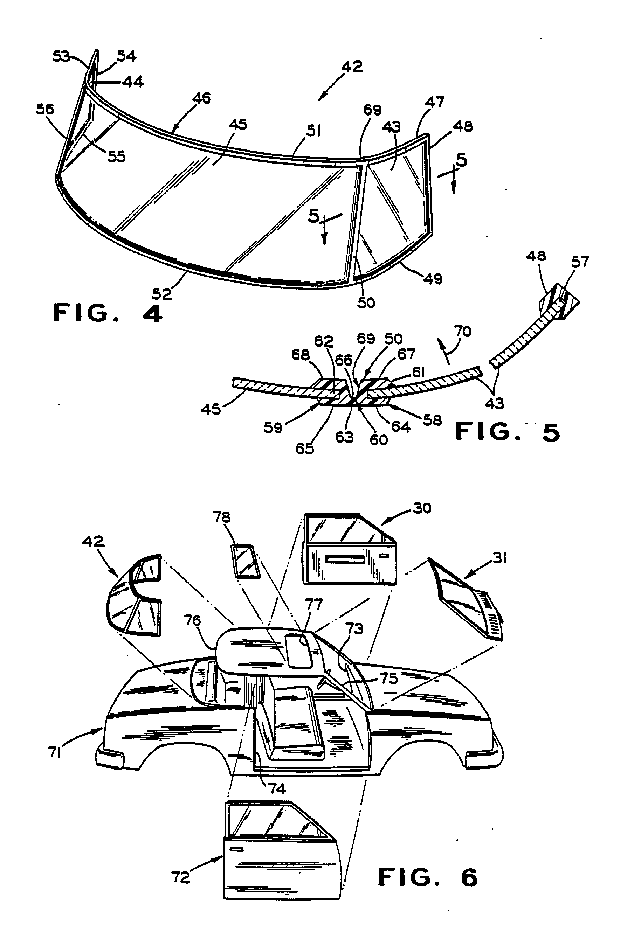

There is shown in Fig. 4 a modular rear window assembly 42 including a pair of side or rear quarter panel windows 43 and 44 joined to either side of a rear window 45. The windows 43, 44 and 45 can be formed of flat or curved sheets of transparent material as shown. In either case, the final configuration of the window assembly 42 would be difficult, if not impossible, to achieve with a single sheet of transparent material.

The edges of the windows are encapsulated by a gasket 46 which also forms a hinge connecting the rear window 45 at one side to the side window 43 and at the other side of the side window 44. For example, side window 43 is encapsulated along the top edge by a top edge portion gasket 47, is encapsulated along one side edge by side edge portion gasket 48, and is encapsulated along a bottom edge of the side window 43 by a bottom edge portion gasket 49. The opposite side edge of the side window 43 is encapsulated by a hinge portion gasket 50 which also encapsulates an adjacent side edge of the rear window 45. The top edge of the rear window 45 is encapsulated by a top edge gasket portion 51 and the bottom edge of the rear window 45 is encapsulated by a bottom edge portion gasket 52. The top edge of the side window 44 is encapsulated by a top edge portion gasket 53, a side edge of the window 44 is encapsulated by a side edge portion gasket 54, and a bottom edge portion gasket 55 encapsulates the bottom edge of the side window 44. The other side edge of the side window 44 is attached to an adjacent side edge of the rear window 45 by a side edge portion gasket 56.

As shown in Fig. 5, an enlarged fragmentary cross-sectional view taken along the line 5—5 of Fig. 4, the side edge gasket 48 wraps around and completely encloses a side edge portion 57 of the side quarter panel window 43. The gasket 48 is representative of the gasket portions 47, 49, 51, 52, 53, 54 and 55. The gasket portion 50 is formed with two edge enclosing portions 58 and 59 joined by a narrow cross-section hinge portion 60. The side portions 58 and 59 are similar in cross-section to the side portion 48. The side portion 58 encapsulates an edge portion 61 of the side window 43 and the side portion 59 encapsulates an edge of the rear window 45. The hinge portion 50 permits relative angular movement between the side window 43 and the rear window 45 during manufacture, shipping and installation. Thus, the side windows 43 and 44 and the rear window 45 can be formed in separate operations and then assembled together with the moulded gasket 46 into a more complex configuration which is easier to install into a vehicle. The gasket 46 also seals against the intrusion of fluid such as wind and rain between the glass windows and the body of the vehicle.

As shown in Fig. 5, the hinge portion 60 is formed with an outer surface 63 which is substantially coplanar with outer surfaces 64 and 65 of the side portions 58 and 59 respectively. An inner surface 66 of the hinge portion 60 is substantially recessed from the inner surfaces 67 and 68 of the side portions 58 and 59 respectively to form a substantially U-shaped groove 69 extending the length of the side edge gasket portion 50. As the side window 43 is moved in the direction of an arrow 70, the groove 69 becomes narrower, but the outer surface 63 remains substantially the same to provide a smooth appearance on the exterior of the vehicle.

As stated above, parts formed of metal, plastic or any other suitable material can be attached to a glass panel utilizing the gasket material. For example, rigid plastic parts made from a thermoplastic such as polyvinyl chloride (PVC) and/or parts formed from a rubber-like terpolymer (EPDM) can be placed in a mould with one or more glass sheets and partially or fully encapsulated with gasket material to form a modular unit.

There is shown in Fig. 6 an exploded perspective view of a vehicle body 71 and the various modular window assemblies to be installed on said body in accordance with the method of the present invention. The modular assemblies include a driver's door and window assembly 30, a complementary passenger's door and window assembly 72, a windshield and leaf screen assembly 31, and a rear window assembly 42. The vehicle body includes corresponding openings for receiving the various assemblies such as a driver's door opening 73 for receiving the modular door assembly 30, a passenger's door opening 74 for receiving the modular passenger door assembly 72, a windshield opening 75 for the modular windshield 31, and a rear window opening 76 for the modular rear window assembly 42. In addition, an opening 77 can be formed in a roof of the vehicle body 71 to accept a sun roof assembly 78 of any of many commercially available types. Each of the modular window assemblies 30, 31, 42, 72 and 78 are manufactured separately and then brought to a vehicle assembly line to be installed on the vehicle body 71 at the appropriate time.

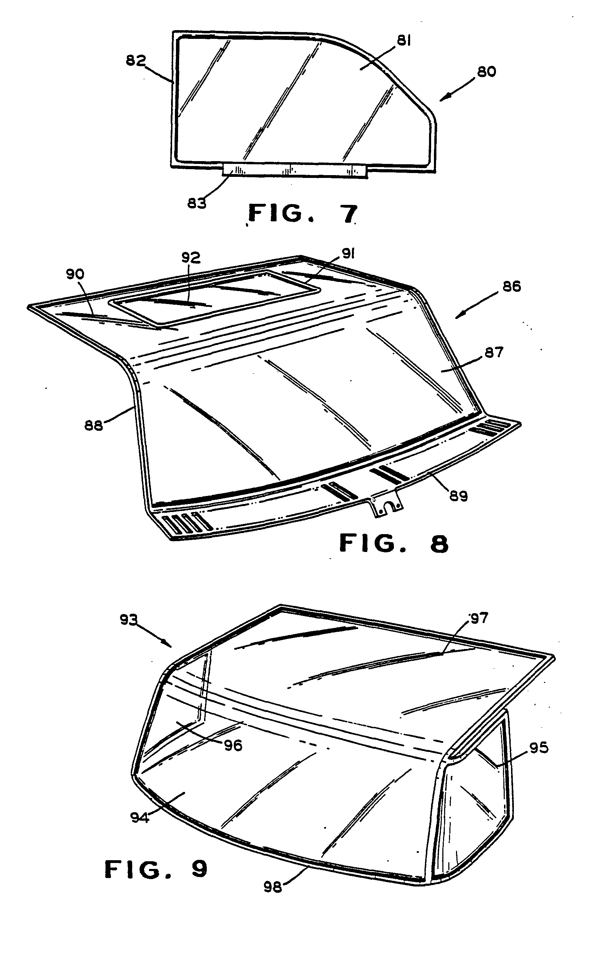

As the automotive stylist creates cars having more glass area, the use of modular window assemblies according to the present invention will enable the manufacture of a vehicle having all glass panels above the belt line. The panels can be formed of clear glass, tinted glass, and glass having one or both surfaces coated with an opaque or semi-transparent material, and panels which open and close. There is shown in Figs. 7 through 10 an alternate embodiment of various modular window assemblies utilized in the method according to the present invention.

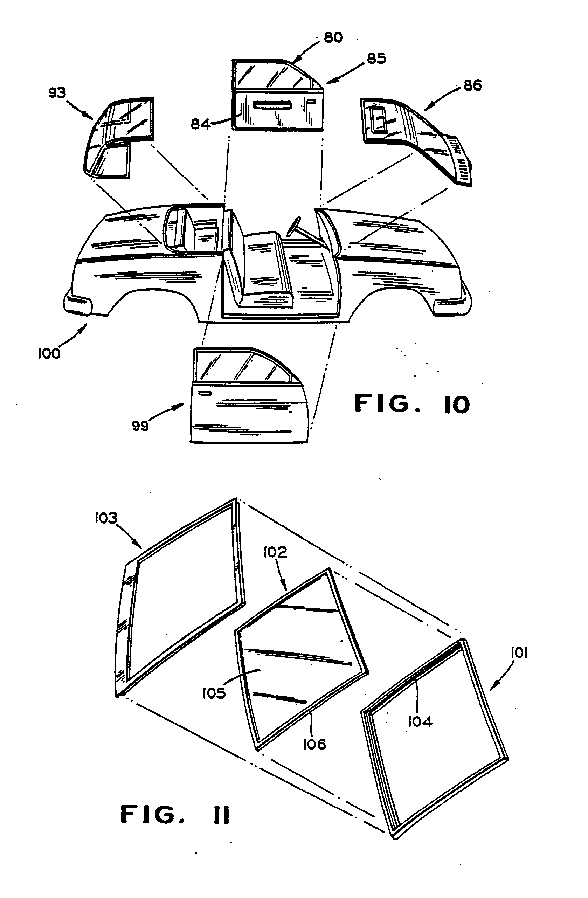

There is shown in Fig. 7 a modular door window assembly 80 which includes a sheet of glass 81 having its peripheral edges encapsulated in a gasket material 82. A bracket 83 can be attached to the glass sheet by the gasket material 82 for connection with a window raising and lowering mechanism such as the one shown in Fig. 2. The window assembly 80 can be attached to a driver's door 84 to form a door assembly 84 as shown in Fig. 10. The door 84 does not include an upper frame for surrounding the peripheral edge of the window assembly 80 although such a frame could be provided as shown in Fig. 2.

There is shown in Fig. 8 an alternate embodiment modular windshield assembly 86. The assembly 86 includes a glass windshield 87 having its peripheral edge encapsulated in a gasket 88. A leaf screen 89 is formed integral with a bottom edge portion of the gasket 88. The windshield also includes an upper portion 90 which is formed to extend over a forward portion of the passenger compartment of a vehicle when the windshield assembly 86 is installed in a vehicle body. There is formed in the upper portion 90 an aperture having its peripheral edge portion encapsulated in a gasket 91. The opening is closed by a glass panel or sun roof 92 which can have one of its edges, preferably the front edge, encapsulated by the gasket 91 to form a hinge thereby allowing the rear edge of the sun roof 92 to be raised.

Thus, the gasket and hinge 91 serves to seal the opening when the sun roof 92 is closed and functions as a hinge to allow movement of the sun roof 92 when it is desired to open the sun roof. Of course, the gaskets 88 and 91 and the leaf screen 89 can be formed on the windshield 87 and the sun roof 92 in a single moulding process as previously described.

There is shown in Fig. 9 a modular rear window assembly 93. The assembly 93 includes a rear window 94, side or rear quarter windows 95 and 96, and a roof panel 97 all formed of glass sheets. The windows 94, 95, 96 and 97 are joined together by a gasket and hinge 98 which encapsulates the peripheral edges of all of the panels. If the panels and the gasket are not formed in the final position shown in Fig. 9, it will be necessary to connect some of the panels together with a hinge portion gasket and then seal abutting gasket portions after the assembly has been installed in the vehicle body.

There is shown in Fig. 10 the modular windshield assembly 86, the modular rear window assembly 93, the modular driver's door assembly 85, and a complementary modular passenger's door assembly 99 positioned to be installed on a vehicle body 100. The assemblies 86 and 93 are constructed to abut gasketed edges to form a roof over the passenger compartment. The abutting edges can be sealed and the door window assemblies rolled up into engagement with the roof portion to form a fluid tight cover for the passenger compartment consisting of all glass panels above the belt line of the vehicle body. If necessary, either or both of the modular assemblies 86 and 93 could be formed with a strengthening means such as a roll bar which is attached to the vehicle body when the modular assemblies are installed. Alternatively, the roll bar could be installed on the vehicle body prior to the installation of the modular assembly.

There is shown in Fig. 11 another alternate embodiment of an encapsulated back window for a vehicle. Many vehicles are of the popular lift back or hatch type. A modular assembly can be formed of an inner frame 101, a back window assembly 102 and an outer frame 103. The inner frame 101 includes a step 104 formed on an inner periphery of the frame upon which a peripheral edge portion of the back window assembly 102 resets. The outer frame 103 is then attached to the inner frame 101 to sandwich the back window assembly 102 between the two frames. The back window assembly 102 can be formed of a sheet of glass 105 and an encapsulating gasket portion 106. The gasket 106 can be formed on the glass sheet 105 in a separate operation as previously discussed or it can be formed in a moulding operation with the inner frame 101. In some instances, the sheet of glass 105 could be assembled with the inner frame 101 and the outer frame 103 forming a portion of a mould cavity. After all the parts have been assembled, hardware (not shown) for attaching the back window assembly to the vehicle can be installed.

## Claims

1. A method of assembling a vehicle from a vehicle body (71) including door window raising and lowering linkage (12) and a plurality of modular window assemblies (10) including door windows (17) comprising the steps of:

(a) a positioning a sheet of transparent material (19) and a bracket (15) for cooperation with said linkage positioned along the periphery of said sheet and within the interior of a mould chamber formed by at least two cooperating mould sections;

(b) said mould sections provided with a gasket shaping portion which cooperates with a first peripheral portion (16) of the sheet and said bracket to define a first gasket forming cavity corresponding to a first gasket member (29) to be formed and cooperates with a second peripheral portion of the sheet to define a second gasket forming cavity corresponding to a second gasket member (18 or 20) to be formed;

(c) injecting into the first and second gasket forming cavities a composition which is capable of polymerization when cured and, when cured in contact with the sheet and bracket, it adheres thereto to produce the first and second gasket members;

(d) removing the sheet and the first and second gasket members and the bracket as a modular door window assembly from the mould chamber;

(e) repeating steps (a) through (d) to produce a plurality of modular door window assemblies; and

(f) attaching said plurality of modular window assemblies to a vehicle body to assemble a vehicle with said linkages cooperating with said brackets.

2. A method of assembling a vehicle from a vehicle body (71) including door window raising and lowering linkage and a plurality of modular window assemblies including door windows (17) comprising the steps of:

(a) positioning a sheet of transparent material within the interior of a mould chamber formed by at least two cooperating mould sections;

(b) said mould sections provided with a gasket shaping portion and a bracket shaping portion which cooperate with a first peripheral portion (16) of the sheet to define a first gasket forming cavity corresponding to a first gasket member and a bracket forming cavity corresponding to a bracket (15) to be formed and cooperates with a second peripheral portion of the sheet to define a second gasket forming cavity corresponding to a second gasket member (18 or 20) to be formed.

(c) injecting into the first and second gasket forming cavities a composition which is capable of polymerization when cured and, when cured in contact with the sheet, it adheres thereto to produce the first and second gasket members and bracket;

(d) removing the sheet and the first and second gasket members and bracket as a modular door window assembly from the mould chamber;

(e) repeating steps (a) through (d) to produce a plurality of modular window assemblies; and

(f) attaching said plurality of modular window assemblies to a vehicle body to assemble a vehicle with said linkages cooperating with said brackets.

3. The method according to claim 1 or claim 2 wherein for at least one of said plurality of modular window assemblies a step of inserting a plug between said first and second cavities is performed before performing step (c), and step (c) is performed by injecting said composition into one of said first and second gasket forming cavities, removing said plug and then injecting said composition into the other one of said first and second gasket forming cavities.

4. The method according to claim 3 wherein said composition injected into one of said first and second gasket forming cavities is a different material than the composition injected into the other one of said first and second gasket forming cavities.

5. The method according to claim 1 wherein said bracket means is metal.

6. The method according to claim 1 wherein said gasket includes a rib portion extending along and adhered to the peripheral edge of said sheet, said rib portion connecting said first member of said gasket to said second member of said gasket.

**Patentansprüche**

1. Verfahren zum Zusammenbauen eines Fahrzeugs aus einem Fahrzeugkörper (71), enthaltend ein Türfenster-Anhebe- und -Absenk-Verbindungssystem (12) und eine Vielzahl von modularen Fenster-Zusammenordnungen (10) mit Türfenstern (17), gekennzeichnet durch folgende Schritte:

a) Positionierung einer Scheibe aus transparentem Material (19) und eines Trägers (15) zum Zusammenwirken mit dem genannten Verbindungssystem, das entlang des Umfanges dieser Scheibe im Innern einer Formkammer positioniert wird, die durch wenigstens zwei zusammenwirkende Formabschnitte gebildet wird;

b) diese Formabschnitte sind mit einem Dichtungsformungsteil versehen, der mit einem ersten Umfangsteil (16) der Scheibe und dem genannten Träger zusammenwirkt, um einen ersten dichtungsformenden Hohlraum zu bilden, der mit einem zu formenden ersten Dichtungselement (29) übereinstimmt, und mit einem zweiten Umfangsteil der Scheibe zusammenwirkt, um einen zweiten dichtungsformenden Hohlraum zu bilden, der mit einem zu formenden zweiten Dichtungselement (18 oder 20) übereinstimmt;

c) Einführen einer Zusammensetzung in die ersten und zweiten dichtungsformenden Hohlräume, wobei diese Zusammensetzung polymerisierungsfähig ist, wenn sie aushärtet, und wobei sie, wenn sie in Berührung mit der Scheibe und dem Träger aushärtet, daran anhaftet, um die ersten und zweiten Dichtungselemente herzustellen;

d) Entfernen der Scheibe sowie der ersten und zweiten Dichtungselemente und des Trägers als eine modulare Türfensterzusammenordnung aus der Formkammer;

e) Wiederholung der Schritte a) bis d), um eine Vielzahl von modularen Türfensterzusammenordnungen herzustellen; und

f) Anbringen dieser Vielzahl von modularen Fensterzusammenordnungen an einem Fahrzeug, um ein Fahrzeug mit den genannten Verbindungssystemen zusammenzubauen, die mit den genannten Trägern zusammenwirken.

2. Verfahren zum Zusammenbauen eines Fahrzeugs aus einem Fahrzeugkörper (71) enthaltend ein Türfenster-Anheb- und Absenk-Verbindungssystem und eine Vielzahl von modularen Fensterzusammenordnungen mit Türfenstern (17), gekennzeichnet durch folgende Schritte:

a) Positionierung einer Scheibe aus transparentem Material im Innern einer Formkammer, die durch wenigstens zwei zusammenwirkende Formabschnitte gebildet wird;

b) diese Formabschnitte sind mit einem Dichtungsformungsteil und einem Trägerformungsteil versehen, die mit einem ersten Umfangsteil (16) der Scheibe zusammenwirken, um einen dichtungsformenden Hohlraum, der mit einem ersten Dichtungsteil übereinstimmt, sowie einen trägerformenden Hohlraum zu bilden, der mit einem zu bildenden Träger (15) übereinstimmt, und mit einem zweiten Umfangsteil der Scheibe zusammenwirken, um einen zweiten dichtungsformenden Hohlraum zu bilden, der mit einem zu formenden zweiten Dichtungselement (18 oder 20) übereinstimmt;

c) Einführen einer Zusammensetzung in die ersten und zweiten dichtungsformenden Hohlräume, wobei diese Zusammensetzung polymerisierungsfähig ist, wenn sie aushärtet, und wobei sie, wenn sie in Berührung mit der Scheibe aushärtet, daran anhaftet, um die ersten und zweiten Dichtungselemente sowie den Träger herzustellen;

d) Entfernen der Scheibe und der ersten und zweiten Dichtungselemente und des Trägers als einen modulare Türfensterzusammenordnung aus der Formkammer;

e) Wiederholung der Schritte a) bis d), um eine Vielzahl von modularen Fensterzusammenordnungen herzustellen; und

f) Anbringen dieser Vielzahl von modularen Fensterzusammenordnungen an einem Fahrzeug, um ein Fahrzeug mit den genannten Verbindungssystemen zusammenzubauen, die mit den genannten Trägern zusammenwirken.

3. Verfahren nach Anspruch 1 oder 2, dadurch gekennzeichnet, daß für wenigstens eine der Vielzahl der modularen Fensterzusammenordnungen der Schritt eines Einsetzens eines Stopfens zwischen den genannten ersten und zweiten Hohlräumen vor Ausführung des Schrittes c) durchgeführt wird und daß der Schritt c) ausgeführt wird durch Einführen der genannten Zusammensetzung in einen der ersten und zweiten dichtungsformenden Hohlräume, Entfernen des Stopfens und danach Einführen der genannten Zusammensetzung in den anderen der ersten und zweiten dichtungsformenden Hohlräume.

4. Verfahren nach Anspruch 3, dadurch gekennzeichnet, daß die Zusammensetzung, die in den einen der ersten und zweiten dichtungsformenden Hohlräume eingeführt wird, ein anderes Material ist als die Zusammensetzung, die in den anderen der ersten und zweiten dichtungsformenden Hohlräume eingeführt wird.

5. Verfahren nach Anspruch 1, dadurch gekennzeichnet, daß der genannte Träger aus Metall ist.

6. Verfahren nach Anspruch 1, dadurch gekennzeichnet, daß die genannte Dichtung einen Rippenteil enthält, der sich entlang der Umfangskante der Scheibe erstreckt und daran anhaftet, wobei dieser Rippenteil das genannte erste Element der Dichtung mit dem zweiten Element dieser Dichtung verbindet.

## Revendications

1. Procédé d'assemblage d'un véhicule à partir d'une carrosserie de véhicule (71) comprenant un mécanisme de levage et de descente (12) des glaces de portes et plusieurs ensembles modulaires de glaces (10) comprenant des glaces de portes (17) comprenant les étapes suivantes:

(a) mise en place d'une feuille de matériau transparent (19) et d'un support (15) pour coopérer avec ledit mécanisme placé sur le pourtour de ladite feuille et à l'intérieur d'une chambre de moulage formée par au moins deux parties de moule coopérantes;

(b) lesdites parties de moule étant équipées d'une partie de mise en forme des joints qui coopère avec une première partie périphérique (16) de la feuille et dudit support pour déterminer une première cavité de formation de joint qui correspond à un premier élément de joint (29) à former et qui coopère avec une seconde partie périphérique de la feuille pour délimiter une seconde cavité de formation de joint correspondant à un second élément de joint (18 ou 20) à former;

(c) l'injection dans la première et la seconde cavités de formation des joints d'une composition susceptible de se polymériser lorsqu'elle est durcie et, lorsqu'elle est durcie en contact avec la feuille et le support, elle y adhère en formant le premier et le second éléments de joint;

(d) le dégagement de la chambre de moulage de la feuille ainsi que du premier et du second éléments de joint et du support sous forme d'un ensemble modulaire de glace de porte;

(e) la répétition des étapes (a) à (d) pour former plusieurs ensembles modulaires de glaces de portes; et

(f) la fixation desdits plusieurs ensembles modulaires de glaces sur une carrosserie de véhicule pour assembler un véhicule alors que lesdits mécanismes sont en cooperation avec lesdits supports.

2. Procédé d'assemblage d'un véhicule à partir d'une carrosserie de véhicule (71) comportant un mécanisme de montée et de descente des glaces de portes et de plusieurs éléments modulaires de glaces y compris des glaces de portes (17) comprenant les étapes suivantes:

(a) mise en place d'une feuille de matériau transparent à l'intérieur d'une chambre de moulage formée par au moins deux parties de moule coopérantes;

(b) lesdites parties de moule étant équipées d'une partie de mise en forme des joints et d'une partie de mise en forme d'un support qui coopèrent avec une première partie périphérique (16) de la feuille pour déterminer une première cavité de formation de joint qui correspond à un premier élément de joint et une cavité de formation de support correspondant à un support (15) à former et qui coopère avec une seconde partie périphérique de la feuille pour délimiter une seconde cavité de formation de joint correspondant à un second élément de joint (18 ou 20) à former;

(c) l'injection dans la première et la seconde cavités de formation des joints d'une composition susceptible de se polymériser lorsqu'elle est durcie et, lorsqu'elle est durcie en contact avec la feuille, d'adhérer à cette feuille en formant le premier et le second éléments de joint ainsi que le support;

(d) le dégagement de la chambre de moulage des premier et second éléments de joint et du support constituant un ensemble modulaire de glaces de portes;

(e) la répétition des étapes (a) à (d) pour former plusieurs ensembles modulaires de glaces; et

(f) la fixation desdits plusieurs ensembles modulaires de glaces sur une carrosserie de véhicule pour assembler un véhicule alors que lesdits mécanismes coopèrent avec lesdits supports.

3. Procédé selon la revendication 1 ou 2 dans lequel pour un au moins desdits plusieurs ensembles modulaires de glaces une étape d'introduction d'une cheville entre lesdites première et seconde cavités est effectuée avant l'exécution de l'étape (c), et l'étape (c) est effectuée en injectant ladite composition dans l'une desdites première et seconde cavités de formation de joint, en retirant ladite cheville et en injectant ensuite ladite composition dans l'autre desdites première et seconde cavités de formation de joint.

4. Procédé selon la revendication 3, dans lequel ladite composition injectée dans l'une desdites première et seconde cavités de formation de joint est un matériau différent de la composition injectée dans l'autre desdites première et seconde cavités de formation de joint.

5. Procédé selon la revendication 1, dans lequel ledit moyen de support est métallique.

6. Procédé selon la revendication 1, dans lequel ledit joint comprend une partie de nervure s'étendant le long de et adhérant au bord périphérique de ladite feuille, ladite partie de nervure reliant ledit premier élément dudit joint audit second élément dudit joint.

EP 0 252 123 B1

FIG. 1

FIG. 2

FIG. 3

1

FIG. 4

FIG. 5

FIG. 6

FIG. 7

FIG. 8

FIG. 9

FIG. 10

FIG. II

4